# EUROPÄISCHE PATENTSCHRIFT

(11) **EP 2 609 479 B1**
(45) Veröffentlichungstag und Bekanntmachung des Hinweises auf die Patenterteilung: **01.10.2014**
(21) Anmeldenummer: 11804637.4
(22) Anmeldetag: 26.08.2011
(51) Int. Cl.: G06F 1/16, H04B 1/38, F16M 13/00

(54) **ZUSAMMENSTECKBARE UND VERSCHRAUBBARE HALTERUNG MIT ANWENDUNGSSPERRE FÜR ELEKTRONISCHE MOBILE ENDGERÄTE**
RETAINER FOR ELECTRONIC MOBILE TERMINALS THAT CAN BE PLUGGED TOGETHER OR SCREWED AND THAT HAS A USAGE LOCK
SUPPORT ENFICHABLE ET VISSABLE AVEC VERROU D'APPLICATION POUR TERMINAUX MOBILES ÉLECTRONIQUES

(30) Priorität: 27.08.2010 DE 202010011923 U
(43) Veröffentlichungstag der Anmeldung: 03.07.2013
(73) Patentinhaber: q-bus Mediatektur GmbH, 10587 Berlin (DE)
(72) Erfinder: MATZER, Guido, 10117 Berlin (DE)
(74) Vertreter: Schott, Marc-Thilo
(86) Internationale Anmeldenummer: PCT/EP2011/004260
(87) Internationale Veröffentlichungsnummer: WO 2012/072154

(56) Entgegenhaltungen:
- EP-A1- 2 187 601
- US-A- 5 623 390
- US-B1- 6 532 152
- US-B1- 7 612 997

## Beschreibung

Die Erfindung betrifft eine zusammensteckbare und miteinander verschraubbare Halterung für elektronische mobile Endgeräte, beispielsweise mit Touchscreen oder Touchpad. Mittels der zusammensteckbaren und miteinander verschraubbaren Halterung werden gezielt, je nach Bedarf und mobilem Endgerät, sämtliche sowohl Haupt- als auch Nebenfunktionstasten sowie Schalter und Anschlüsse des mobilen Endgeräts, wie zum Bespiel der Ein/Aus-Schalter eines Touchscreens, gegen versehentliches oder unbefugt absichtliches Betätigen durch Dritte gesichert. Dabei wird insbesondere die Funktionsfähigkeit des mobilen Endgeräts als solches darüber hinaus nicht eingeschränkt, da beispielsweise der übrige Touchscreen nicht bedeckt ist und somit bedient werden kann. Ferner sind auch die an das mobile Endgerät angeschlossenen Strom- bzw. Datenkabel vollständig von den Steckelementen der Halterung umschlossen, so dass diese ebenso gegen versehentliches oder unbefugt absichtliches Betätigen oder Entfernen durch Dritte gesichert sind. Aufgrund spezieller Materialaussparungen, welche im Gehäuserahmen der Halterung je nach mobilem Endgerät und Bedarf flexibel gestaltet werden können, sind beispielsweise weitere Kabel mühelos an das mobile Endgerät anzuschließen und werden später mittels eines weiteren Steckelements abgedeckt. Ferner sind im Gehäuserahmen der Halterung weitere spezielle flexible Materialaussparungen vorgesehen, so dass beispielsweise die in das mobile Endgerät eingebauten Lautsprecher nicht abgedeckt werden und der Audioklang erhalten bleibt. Zudem besitzt die Halterung eine variable Kabelführung, mittels derer das Strom- bzw. Datenkabel zunächst im inneren der Halterung geführt wird und anschließend flexibel in fünf Richtungen (oben, unten, links, rechts, hinten) aus der Halterung herausgeführt und weitergeleitet werden kann. Die Rückseite der Halterung ist derart ausgestaltet, dass die Halterung direkt an beispielsweise einer Wand angebracht werden oder mit jeder sonstigen Vorrichtung verbunden, verschraubt oder sonst in diese integriert werden kann. Auch sind die Verbindungsstellen für die Verschraubung der Steckelemente der Halterung teilweise mit Gewindehülsen ausgestattet. Zudem sind die Verbindungsstellen derart an den Steckelementen der Halterung platziert, dass diese unabhängig vom Anbringungsort der Halterung als solche, beispielsweise an einer Wand, erreicht und aufgeschraubt werden können. Somit kann das mobile Endgerät jederzeit erreicht werden, um es leicht in der Halterung nach oben zu schieben oder ganz aus der Halterung zu entfernen.

Derartig flexible und umfangreiche Stecksysteme für mobile Endgeräte unterschiedlicher Abmessung, beispielsweise mit Touchscreen oder Touchpad, sind derzeit nicht erhältlich. Halterungen für mobile Endgeräte üblicher Bauart unterliegen meist einem Typenzwang und sind somit nur für ein bestimmtes mobiles Endgerät nutzbar. Zudem sind sämtliche Haupt- und Nebenfunktionstasten sowie Schalter und Anschlüsse des mobilen Endgeräts mit Touchscreen oder Touchpad, während es sich in Halterungen üblicher Bauart befindet, weiterhin uneingeschränkt zu betätigen bzw. zu berühren. Andere handelsübliche Halterungen wiederum haben die Eigenschaft, dass sie das mobile Endgerät, während es sich in der Halterung befindet, komplett von allen Seiten derart umschließen, dass dieses weder betätigt, genutzt noch sonst verwendet werden kann - einzig das Betrachten des mobilen Endgeräts ist meist möglich. Die Halterungen üblicher Bauart für mobile Endgeräte schränken somit die Funktionsfähigkeit und Nutzungsmöglichkeiten des mobilen Endgeräts entweder nicht ausreichend oder zu umfangreich ein. So bieten die handelsüblichen Halterungen keinen ausreichenden Schutz gegen unbefugtes Betätigen der Funktionselemente des mobilen Endgeräts oder ausreichenden Schutz gegen das Entfernen des mobilen Endgeräts von seinem Bestimmungsort, wie beispielsweise Diebstahl. Ferner bieten die handelsüblichen Halterungen keinen ausreichenden Schutz gegen unbefugtes Betätigen oder Entfernen der an das mobile Endgerät angeschlossenen Kabel und vorhandenen Anschlüsse. Darüber hinaus sind die Halterungen üblicher Bauart nicht in den dem Umfang, so wie es mit der Erfindung möglich ist, in sonstige Vorrichtungen zu integrieren oder direkt an beispielsweise einer Wand anzubringen. Insbesondere eine vollkommen variable Kabelführung, der an das mobile Endgerät angeschlossenen Kabel, wird hierbei nicht gewährleistet.

Aus den Veröffentlichungen US 7,612,997 B1 oder EP 2 187 602 A1 sind Halterungen bekannt, die aus Steckelementen zusammengesetzt sind, wobei die Steckelemente ausschließlich durch Ineinanderstecken miteinander verbunden werden.

In den Veröffentlichungen US 6,532,152 B1 oder US 5,623,390 A werden Halterungen offenbart, welche aus Steckelementen zusammengesetzt sind. Die Steckelemente werden von vorn durch Öffnungen in der Vorderseite der Steckelemente miteinander verschraubt.

Der vorliegenden Erfindung liegt die Aufgabe zugrunde, die bisherigen Einsatzmöglichkeiten und den Leistungsumfang von Halterungen üblicher Bauart für mobile Endgeräte, beispielsweise mit Touchscreen oder Touchpad, entscheidend zu verbessern und zu erweitern, um somit zugleich die Funktionsfähigkeit und Nutzungsmöglichkeiten des mobilen Endgerätes zu verbessern und zu erweitern.

Der vorliegenden und im Schutzanspruch zu 1 angegebenen Erfindung liegt folgendes Problem zugrunde. Es gilt eine Halterung für mobile Endgeräte zu schaffen, welche die versehentliche oder unbefugt absichtliche Bedienung sämtlicher Haupt- und Nebenfunktionselemente (Tasten, Schalter und Anschlüsse) eines mobilen Endgeräts, wie beispielsweise die Hauptfunktionstaste eines Touchscreens oder Touchpads, den Ein/Aus-Schalter oder den Lautstärkenregler, je nach Bedarf verhindert, ohne zugleich die Bedienung und Funktionalität des mobilen Endgeräts darüber hinaus ungewollt einzuschränken.

Mit der Erfindung wird erreicht, dass das mobile Endgerät derart in die Halterung eingesetzt wird, dass dessen Haupt- und Nebenfunktionselemente je nach Bedarf gezielt umschlossen werden und insbesondere die Bedienoberfläche des mobilen Endgeräts ansonsten nicht abgedeckt wird. Mit der Erfindung werden sämtliche Haupt- und Nebenfunktionstasten sowie Anschlüsse und Schalter, wie beispielsweise Ein/AusSchalter oder Lautstärkenregler, des mobilen Endgeräts mit beispielsweise Touchscreen oder Touchpad, von den jeweiligen Steckelementen der Erfindung gezielt abgedeckt und so gegen versehentliches oder absichtlich unbefugtes Betätigen durch Dritte gesichert. Dabei wird zum Beispiel der Touchscreen eines mobilen Endgeräts nicht ungewollt abgedeckt und somit in seiner sonstigen Funktionalität nicht eingeschränkt. Jedes Steckelement der Erfindung übernimmt dabei eigene Abdeckfunktionen hinsichtlich bestimmter am mobilen Endgerät befindlicher Tasten, Schalter und Anschlüsse. Diese Abdeckfunktion hat die sogenannte Anwendungssperre der jeweiligen Funktionselemente des mobilen Endgeräts zur Folge. Je nach Bedarf, können an jeder Stelle der Steckelemente Materialaussparungen vorgenommen werden, um gewisse Tasten, Schalter oder Anschlüsse auch gezielt freizulegen. Dabei sind zudem Anzahl, Abmessung, Anordnung, Umfang, Platzierung, Ausformung und Material der Steckelemente flexibel und kann je nach Bedarf an das jeweilige mobile Endgerät und deren Funktionen sowie Tasten, Schalter und Anschlüsse angepasst werden. Als vorteilhaft erweist es sich weiterhin, wenn die Materialaussparungen entlang der Steckelemente, beispielsweise zum Anschluss eines Kabels, hinsichtlich Anzahl, Ausformung, Größe und Platzierung variabel sind und je nach Bedarf an das jeweilige mobile Endgerät angepasst werden können. Indem das mobile Endgerät von der Erfindung ganz umschlossen werden kann, wird insbesondere auch das Strom- bzw. Datenkabel, welches an das mobile Endgerät aufgrund einer dafür vorgesehen Materialaussparung angeschlossen werden kann, gegen versehentliches oder absichtlich unbefugtes Betätigen oder Entfernen durch Dritte gesichert. Zudem erfolgt die Kabelführung zunächst im inneren der Erfindung und tritt auf dessen Rückseite aus. Dabei wird zugleich eine variable Kabelführung gewährleistet, indem das Kabel in fünf Richtungen geleitet werden kann. Als vorteilhaft erweist es sich, wenn die Rückseite eines Steckelements vier kanalartige, im rechten Winkel zueinander stehende und in die Himmelsrichtungen zeigende Materialaussparungen aufweist. Dadurch wir ermöglicht, dass das Strom- bzw. Datenkabel des mobilen Endgeräts mittels der Materialaussparungen in fünf Richtungen geleitet werden kann, insbesondere auch dann, wenn sämtliche Steckelemente miteinander verbunden und verschraubt sind, und die Halterung zusätzlich beispielsweise an einer Wand angebracht worden ist. Die einzelnen Steckelemente der Erfindung sind zudem miteinander verschraubbar. Hierfür sind Öffnungen teilweise mit und teilweise ohne Gewindehülse an den Steckelementen vorhanden. Als vorteilhaft erweist es sich, wenn Öffnungen der Halterung hinsichtlich Anzahl, Ausformung, Platzierung und Größe auch flexibel gestaltet werden können. Die Anordnung der für die Verschraubung vorgesehenen Öffnungen zweier Steckelemente ist dabei besonders. Sie erfolgt derart, dass die Verbindungsstellen der Verschraubung, unabhängig vom Anbringungs- bzw. Verweilort der Erfindung, jederzeit erreicht und aufgeschraubt werden können, indem diese vertikal von oben verschraubt und erreicht werden. So kann das obere Steckelement gelöst werden und das mobile Endgerät kann beispielsweise innerhalb der Erfindung nach oben geschoben werden. Auf diese Weise können Tasten und Schalter erreicht werden, ohne das mobile Endgerät vollständig aus der Erfindung herauszunehmen. Dagegen kann das mobile Endgerät auch vollständig aus der Erfindung herauszunehmen, ohne dass diese extra von einer Wand abzumontieren wäre.

Ein besonderer Vorteil der erfindungsgemäßen Halterung besteht darin, dass die zusammengesteckte Halterung als Ganzes flexibel an der gewünschten Position bzw. aller Ort transportiert, fixiert und integriert werden kann.

Die gesamte Erfindung kann zudem in sonstige Vorrichtungen integriert werden. Insbesondere aufgrund der Ausgestaltung der Rückseite der Erfindung, welche vier Öffnungen aufweist, kann diese flexibel direkt an beispielsweise einer Wand angebracht werden oder mit einer sonstigen Fläche verbunden bzw. verschraubt werden. Das mobile Endgerät kann somit flexibel aller Ort angebracht werden.

Das Problem wird mit den im Schutzanspruch zu 1 aufgeführten besonderen Merkmalen gelöst.

Das Problem wird erfindungsgemäß gelöst, indem die Halterung aus zusammensteckbaren und verschraubbaren Steckelementen besteht, wobei vorzugsweise im inneren der zusammengesteckten Halterung ausreichend Raum für die Aufnahme eines mobilen Endgeräts vorhanden ist. In einer bevorzugten Ausführungsform ist weiter vorgesehen, dass die Innenseite der Steckelemente derart ausgeformt ist, dass diese Materialaussparungen aufweisen, in welche das jeweilige mobile Endgerät eingesetzt bzw. geschoben wird. Das mobile Endgerät wird dabei derart in die Halterung eingesetzt, dass es von deren Steckelementen gezielt vollkommen umschlossen wird, wobei dessen Bedienoberfläche gerade nicht vollkommen umschlossen ist und somit die Funktionalität je nach Bedarf erhalten bleibt. Dabei wird das mobile Endgerät zunächst in ein Steckelement eingesetzt bzw. hineingeschoben. Anschließend wird das Strom- bzw. Datenkabel an das mobile Endgerät angeschlossen. Hierfür ist extra eine Materialaussparung vorhanden. Danach wird das Kabel im inneren des Steckelements geführt und tritt an der vorgesehenen Aussparung mittig auf der Rückseite aus. Sodann wird ein weiteres Steckelement auf das mobile Endgerät geschoben, so dass beide Steckelemente einander berühren und das mobile Endgerät vollständig umschlossen ist. Anschließend wird ein weiteres Steckelemente über das angeschlossene Strom- bzw. Datenkabel geschoben. Zuletzt werden die Steckelemente miteinander verschraubt. Jedes einzelne Steckelement erfüllt dabei eine Abdeckfunktion bzw. Anwendungssperre hinsichtlich jeglicher Haupt- und Nebenfunktionstasten, Schalter und Anschlüsse des jeweiligen mobilen Endgeräts. Ein Steckelement verdeckt die eine oder mehrere Funktionstaste/n oder Schalter des mobilen Endgeräts, welche sich meist oben auf dem Touchscreen bzw. Touchpad oder an dessen Rand befinden, gezielt komplett. Dieses Steckelement ist dabei so ausgeformt, dass es beispielsweise den restlichen Touchscreen und dessen Funktionen nicht abdeckt und somit die Funktionalität des mobilen Endgeräts nicht weiter einschränkt. Die anderen beiden Steckelemente sind ferner derart gestaltet, dass sie das mobile Endgerät rundum ganz umschließen, wodurch auch die übrigen Haupt- und Nebenfunktionselemente, wie weitere Tasten, Schalter und Anschlüsse, welche sich beispielsweise am Rand des mobilen Endgeräts befinden, gezielt verdeckt werden können. Indem sämtliche Haupt- und Nebenfunktionselemente, Tasten, Schalter und Anschlüsse, je nach Bedarf von der Halterung abgedeckt werden, können diese nicht versehentlich oder unbefugt absichtlich angewendet bzw. betätigt werden, so dass die Halterung eine Anwendungssperre darstellt.
Zudem weisen die Steckelemente der Halterung Materialaussparungen auf, so dass beispielsweise ein Stromkabel an das mobile Endgerät angeschlossen werden kann, während es sich in der komplett zusammengesteckten Halterung befindet oder beispielsweise die festinstallierten Lautsprecher des mobilen Endgeräts gerade nicht abgedeckt werden. Je nach dem, um welches mobile Endgerät es sich handelt, können die Steckelemente und deren Materialaussparungen hinsichtlich Anzahl, Größe und Platzierung flexibel gestaltet werden. Auch das Material, welches der Herstellung der Erfindung dient, ist flexibel. Eine weitere positive Wirkung der Erfindung ist zudem, dass die Steckelemente mit einander verschraubt werden, so dass sie nicht versehentlich oder absichtlich unbefugt auseinandergezogen werden können. Dadurch kann weder das mobile Endgerät noch dessen angeschlossenes Kabel aus den miteinander verschraubten Steckelementen versehentlich oder unbefugt absichtlich entfernt werden. Eine Erweiterung der Erfindung stellt zudem die variable Kabelführung der Erfindung dar. Hierbei wird das Strom- oder Datenkabel, welches an das in der Erfindung befindliche mobile Endgerät angeschlossen ist, zunächst innerhalb der Erfindung geführt und tritt sodann mittig auf deren Rückseite aus. Von dort aus kann das Kabel, mittels einer besonderen Gestaltung der Rückseite der Erfindung und deren Materialaussparung, in fünf verschiedene Richtungen (oben, unten, links, rechts, hinten) geleitet werden. Eine Erweiterung der Erfindung stellt auch dar, dass beispielsweise eine Materialaussparung an einer beliebigen, geeigneten Stelle der Erfindung vorgesehen ist, so dass der Anschluss für beispielsweise ein Kopfhörerkabel am mobilen Endgerät freigelegt wird.

Die Einsatzmöglichkeit dieser zusammensteckbaren und verschraubbaren Halterung mit Anwendungssperre und deren vorteilhafte Wirkungen sind nahezu unbegrenzt, denn die Erfindung kann beispielsweise aller Ort transportiert und verwendet werden. Es obliegt dem Nutzer, ob er das mobile Endgerät in die Erfindung einsetzt und es sodann selbst nutz, in seinen Aktenkoffer legt oder es beispielsweise Dritten zur Verfügung stellt. Insbesondere die gezielte Abdeckung der Haupt- und Nebenfunktionstasten, Schalter und Anschlüsse eines mobilen Endgeräts mit Touchscreen oder Touchpad beugt zum Beispiel möglichem Missbrauch des mobilen Endgeräts durch Dritte vor. Die Einsatzmöglichkeit dieser zusammensteckbaren Halterung wird insbesondere dahingehend erweitert, dass die Halterung selbst bei Bedarf mit anderen Vorrichtungen verbunden und verschraubt bzw. in diese eingesetzt werden kann. Je nach Bedarf kann das mobile Endgerät somit mit Vorrichtungen verbunden werden, welche beispielsweise gerade das Transportieren bzw. Entfernen des mobilen Endgeräts unmöglich machen. So unter anderem im Rahmen der Präsentation des mobilen Endgeräts auf einem Messestand oder sonstigen Verkaufsstand. Mittels der variablen Kabelführung innerhalb und außerhalb der Erfindung ergeben sich auch hier keine Einschränkungen hinsichtlich der Einsatzfähigkeit und Anbringung des mobilen Endgeräts.

So ergeben sich für den Verwender dieser Erfindung zahlreiche neue und verbesserte Nutzungsmöglichkeiten seines mobilen Endgeräts.

Ein Ausführungsbeispiel der Erfindung wird anhand der Figuren 1 bis 7 erläutert. Es zeigen:
**Figur 1** die zusammengesteckte Halterung in einer Vorderansicht samt einem enthaltenen mobilen Endgerät mit Touchscreen bzw. Touchpad,
**Figur 2** die Steckelemente der nicht zusammengesteckten Halterung in einer Vorderansicht,
**Figur 3** die zusammengesteckte Halterung in einer Vorderansicht ohne mobilem Endgerät,
**Figur 4** die Steckelemente der nicht zusammengesteckten Halterung in einer Rückansicht,
**Figur 5** die zusammengesteckte Halterung in einer Rückansicht,
**Figur 6** die Steckelemente der nicht zusammengesteckten Halterung in einer Vorderansicht, wobei die Darstellung transparent ist.
**Figur 7** die zusammengesteckte Halterung in einer Seiten-Teilansicht.

In den Figuren ist die zusammensteckbare und verschraubbare Halterung mit Anwendungssperre für elektronische mobile Endgeräte dargestellt.

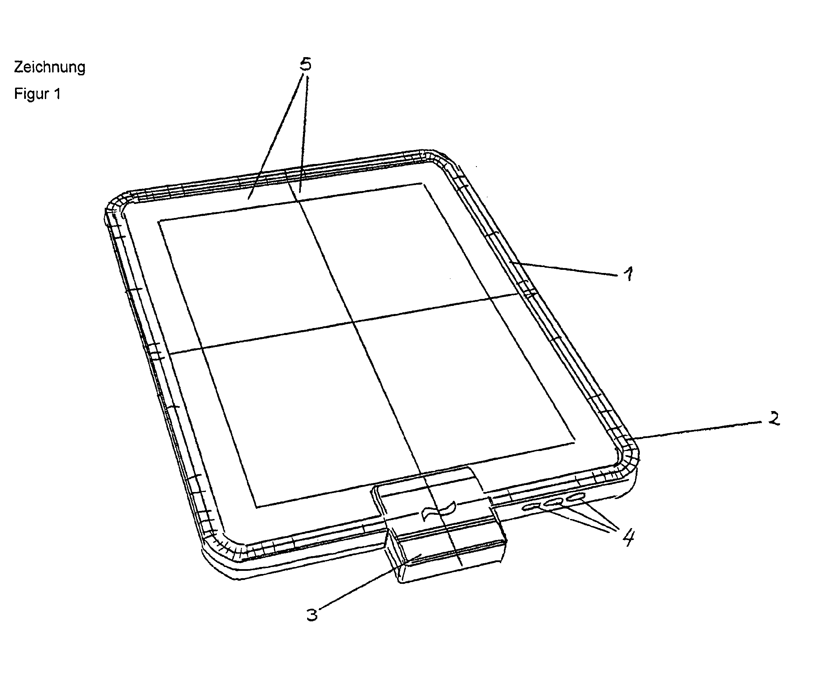

Die **Figur 1** zeigt die zusammengesteckte Halterung bestehend aus einem Steckelement mit "Schiene" (1), einem Steckelement mit "Platte" (2) und einem weiteren Steckelement (3). Zudem zeigt die Figur beispielsweise die Materialaussparungen für die am mobilen Endgerät eingebauten Lautsprecher (4) und das in die Halterung eingesetzte mobile Endgerät (5) mit beispielsweise Touchscreen oder Touchpad. Ein Steckelement (3) deckt dabei gezielt beispielsweise eine oder mehrere Funktionstasten des mobilen Endgeräts auf dem Touchscreen ab und schützt diese somit gegen versehentliches oder unbefugt absichtliches Betätigen durch Dritte. Zugleich schützt und sichert dieses Steckelement (3) das beispielsweise zum Anschluss an dieser Stelle vorgesehene Strom- bzw. Datenkabel des mobilen Endgeräts gegen versehentliches oder unbefugt absichtliches Entfernen bzw. Betätigen durch Dritte, indem es das Kabel vollkommen umschließt. Die anderen Steckelemente (1/2) umschließen dabei ebenfalls das mobile Endgerät von hinten und den Seiten vollkommen, wodurch sämtliche sich dort befindlichen Haupt- und Nebenfunktionstasten, Schalter und Anschlüsse verdeckt sind.

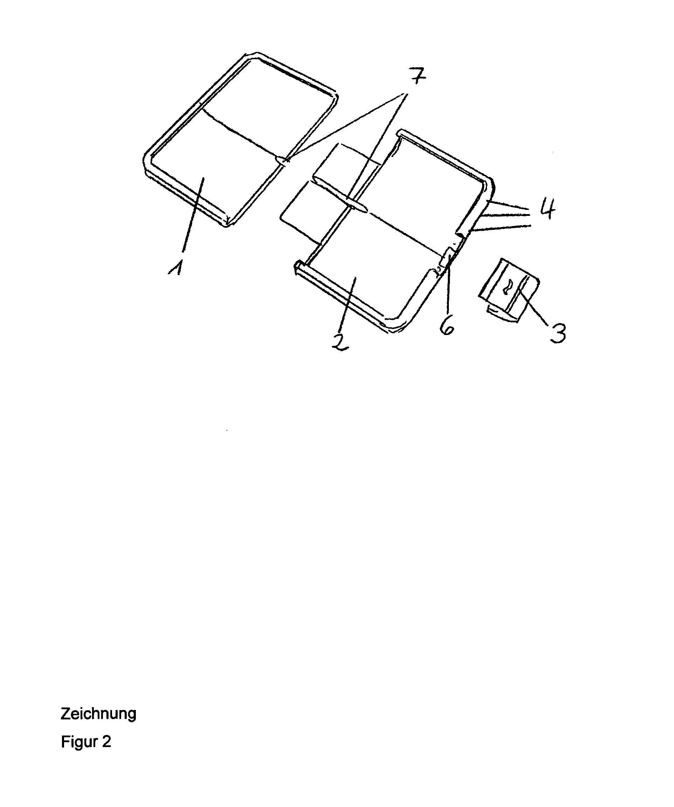

Die **Figur 2** zeigt die Steckelemente (1/2/3) der Halterung, sowie eine Materialaussparung mittig (6) am unteren Rand des Steckelements (2) für den Anschluss beispielsweise eines Strom- bzw. Datenkabels an das mobile Endgerät. Zudem wird ein Teil der Materialaussparung (7) mittig der beiden Steckelemente (1/2) für die variable Kabelführung gezeigt, mittels derer das Strom- bzw. Datenkabel des mobilen Endgeräts aus der Halterung herausgeführt wird, nachdem es im inneren der Halterung geführt wurde und sodann in fünf Richtungen weitergeleitet werden kann. Gezeigt werden zudem beispielsweise die Materialaussparungen für die Lautsprecher des mobilen Endgeräts (4).

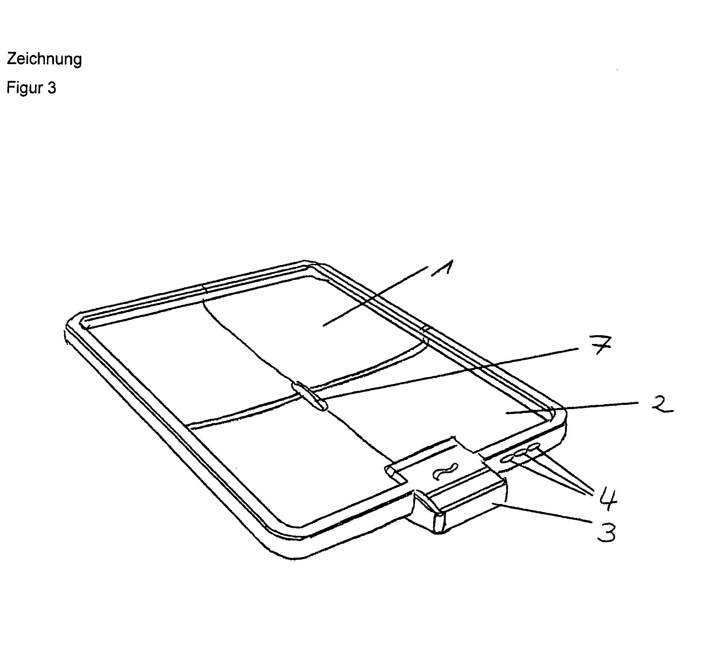

Die **Figur 3** zeigt die zusammengesteckte Halterung bestehend aus einem Steckelement mit "Schiene" (1), einem Steckelement mit "Platte" (2) und einem weiteren Steckelement (3). Zudem wird ein Teil der Materialaussparung (7) mittig der beiden Steckelemente (1/2) für die variable Kabelführung gezeigt und die Materialaussparungen für die Lautsprecher des mobilen Endgeräts (4).

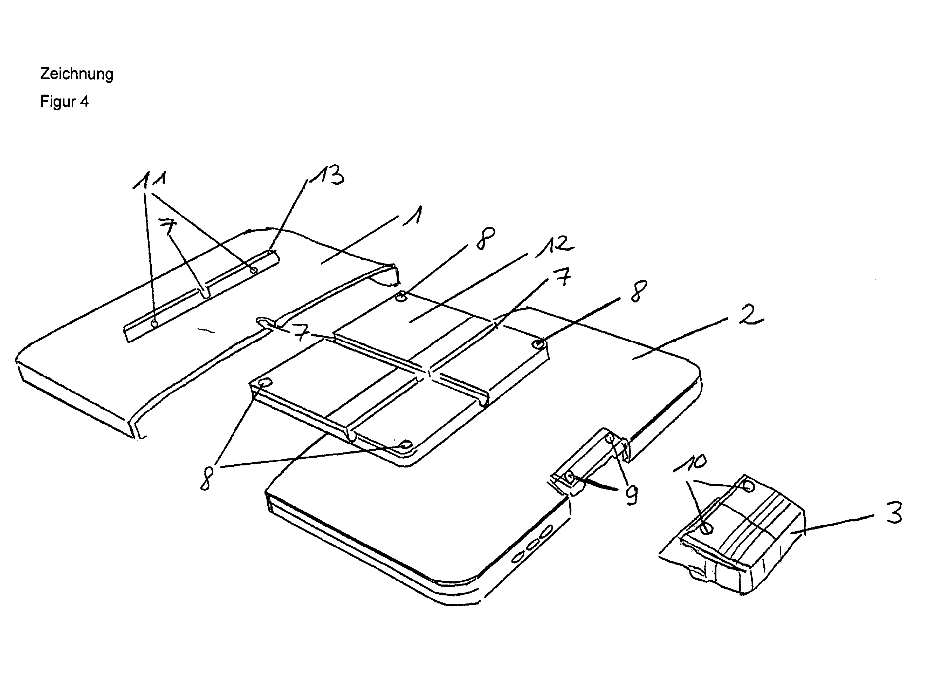

Die **Figur 4** zeigt die Steckelemente (1/2/3) der Halterung und die Verbindungsstellen bzw. Öffnungen (9/10/11), an denen die Steckelemente (1/2/3) miteinander verschraubt werden. Einige Öffnungen sind dabei mit einer Gewindehülse ausgestattet (9), andere Öffnungen (10/11) nicht. An dem einen Steckelement (1) ist eine Art Schiene (13) mit Materialaussparung für den variablen Kabelverlauf (7) angebracht. Vorzugsweise ist die Rückseite des Steckelements (1) in einem Stück derart hergestellt, so dass sich eine nicht entnehmbare Schiene (13) daran befindet. Die Steckelemente (2/3) werden an den Verbindungsstellen (9/10) miteinander verschraubt. Insbesondere ist auch die Materialaussparung für die variable Kabelführung (7) komplett abgebildet, mittels derer das Strom- bzw. Datenkabel des mobilen Endgeräts in fünf verschiedene Richtungen (rechts, links, oben, unten, hinten) außerhalb der Halterung geleitet werden kann. Ferner sind die Öffnungen ohne Gewindehülse auf der Rückseite (8) des einen Steckelements (2) mit Platte (12) abgebildet, mittels derer die gesamte Halterung direkt an beispielsweise einer Wand befestigt werden kann oder mit jeder sonstigen Vorrichtung verbunden werden kann. Vorzugsweise ist die Rückseite des Steckelements (2) in einem Stück derart hergestellt ist, dass sich eine nicht entnehmbare Platte (12) daran befindet.

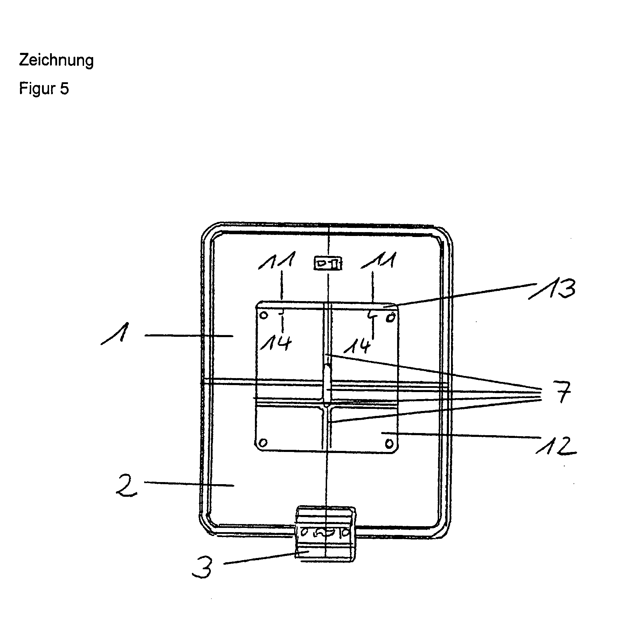

Die **Figur 5** zeigt insbesondere die Verbindungsstellen bzw. Öffnungen (14), an denen die Steckelemente (1/2) miteinander verschraubt werden. Hierzu befinden sich in der Schiene (13) des einen Steckelements (1) zwei Öffnungen ohne Gewindehülse (11), durch welche von oben bzw. vertikal zwei Schrauben durchgeführt werden und somit in die Öffnung mit Gewindehülse (14), welche sich in der Platte (12) des Steckelements (2) befinden, eingeschraubt werden. Somit werden die Steckelemente (1/2) miteinander verschraubt. Auch hier ist die Materialaussparung für die variable Kabelführung (7) komplett abgebildet.

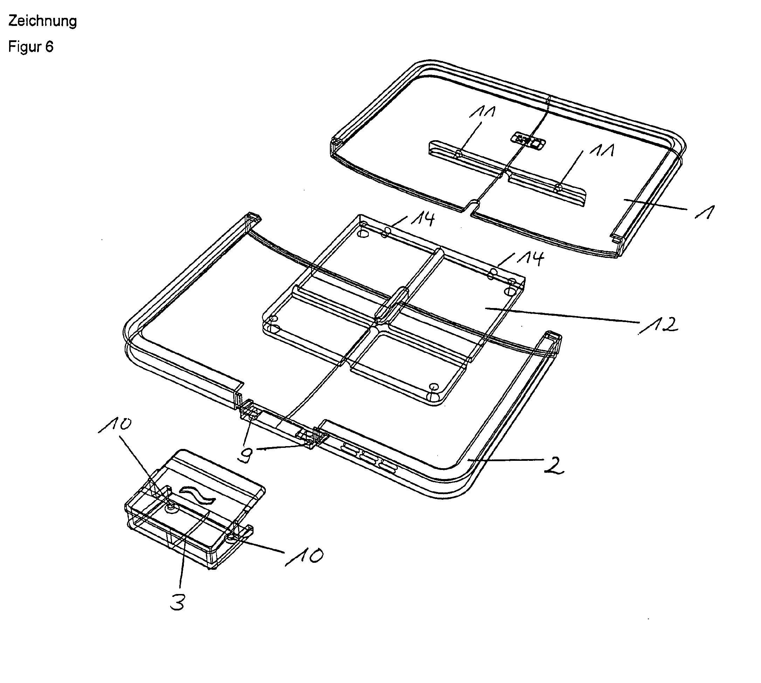

Die **Figur 6** stellt die Halterung transparent dar. Es sind insbesondere die Verbindungsstellen bzw. Öffnungen (14), welche sich in der Platte (12) des Steckelements (2) befinden, an denen die Steckelemente (1/2) vertikal von oben miteinander verschraubt werden, zu sehen. Zudem sind die Öffnungen mit Gewindehülse (9) des Steckelements (2) abgebildet, an welchen das Steckelement (3) mittels der dafür vorgesehenen Öffnung ohne Gewindehülse (10) und Steckelement (2) miteinander verschraubt werden.

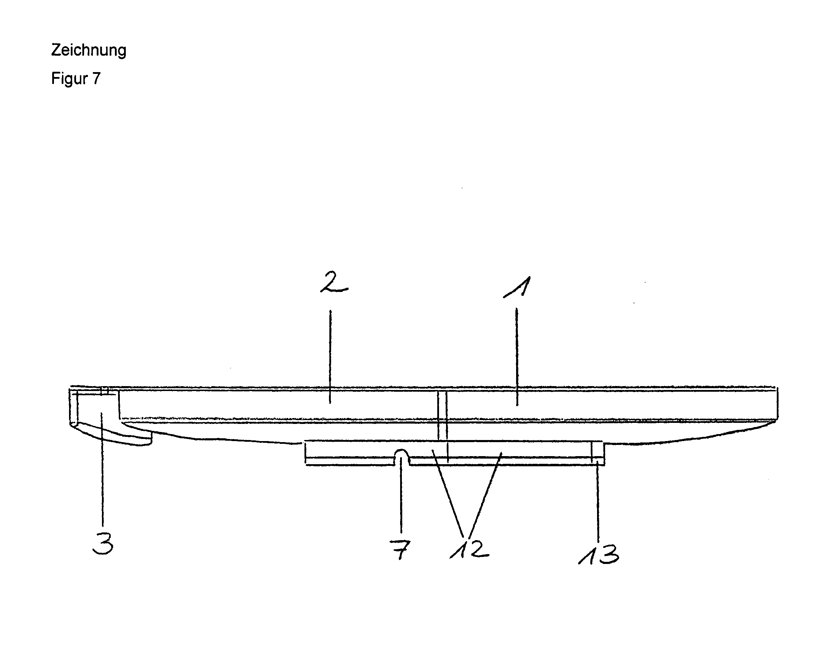

Die **Figur 7** zeigt die zusammengesteckte Halterung bestehend aus einem Steckelement mit "Schiene" (1), einem Steckelement mit "Platte" (2) und einem weiteren Steckelement (3), sowie die Schiene (13), die Platte (12) als auch die Materialaussparung (7) für die variable Kabelführung.

## Patentansprüche

1. Zusammensteckbare und verschraubbare Halterung mit Anwendungssperre für elektronische mobile Endgeräte, wobei die Halterung aus zusammensteckbaren Steckelementen (1/2/3) besteht, wovon jedes Steckelement (1/2/3) gezielt das sich in der Halterung befindliche mobile Endgerät abdeckt bzw. umschließt, wobei die Bedienoberfläche des mobilen Endgeräts größtenteils freigelegt bleibt, wobei die Steckelemente (1/2/3) verschraubbar sind, und wobei die Steckelemente (1/2) Materialaussparungen (4/6/7) aufweisen, welche hinsichtlich Anzahl, Anordnung und Abmessung an das mobile Endgerät angepasst sind,
**dadurch gekennzeichnet, dass**
die Rückseite eines ersten Steckelements (1) derart gestaltet ist, dass diese eine mit dem ersten Steckelement fest verbundene Schiene (13) mit ersten Öffnungen (11) aufweist, die Rückseite eines zweiten Steckelements (2) derart gestaltet ist, dass diese eine mit diesem Steckelement fest verbundene Platte (12) aufweist, die Platte (12) über zweite Öffnungen (8/14) verfügt, welche verschraubbar sind, und wobei ein Teil der zweiten Öffnungen (8) mit sonstigen Vorrichtungen verbindbar sind, die ersten und ein Teil der zweiten Öffnungen (11/14) vertikal von oben miteinander verschraubbar sind, und einige Öffnungen (14) mit Gewindehülsen ausgestattet sind.

2. Halterung nach einem oder mehreren der vorhergehenden Ansprüche,
**dadurch gekennzeichnet, dass** im Inneren der zusammengesteckten Halterung zusätzlich ausreichend Raum für beispielsweise die Strom- und Datenkabelführung vorhanden ist.

3. Halterung nach einem oder mehreren der vorhergehenden Ansprüche,
**dadurch gekennzeichnet, dass** die Rückseite der Halterung (1/2) derart hergestellt ist, dass diese einen Spalt (7) zum Durchführen von beispielsweise einem Strom- oder Datenkabel aufweist.

4. Halterung nach einem oder mehreren der vorhergehenden Ansprüche,
**dadurch gekennzeichnet, dass** die Platte (12) zudem sowohl kanalartig im rechten Winkel zueinander (7) als auch mittig auf der Rückseite Materialaussparungen (7) aufweist.

5. Halterung nach einem oder mehreren der vorhergehenden Ansprüche,
**dadurch gekennzeichnet, dass** am unteren Rand des zweiten Steckelements (2) zumindest eine Materialaussparung (6) vorhanden ist.

6. Halterung nach einem oder mehreren der vorhergehenden Ansprüche,
**dadurch gekennzeichnet, dass** die Steckelemente materialunabhängig und formstabil sind.

7. Halterung nach einem oder mehreren der vorhergehenden Ansprüche,
**dadurch gekennzeichnet, dass** die Platte (12) des zweiten Steckelements (2) derart hergestellt ist, dass diese Materialaussparungen aufweist (7/8), die hinsichtlich Abmessung, Anzahl und Platzierung auch an das mobile Endgerät angepasst sind.

8. Halterung nach einem oder mehreren der vorhergehenden Ansprüche,
**dadurch gekennzeichnet, dass** die zusammengesteckte Halterung als Ganzes mittels des zweiten Steckelements (2) und der damit verbundenen Platte (12) und deren Öffnungen (8) flexibel aller Ort, beispielsweise an einer Wand, angebracht, fixiert, verbunden und verschraubt werden kann.

9. Halterung nach einem oder mehreren der vorhergehenden Ansprüche,
**dadurch gekennzeichnet, dass** eine oder mehrere Aussparung/en (9) am unteren Rand des Steckelements (2) vorhanden sind und diese Aussparung/en (9) samt beispielsweise angeschlossenem Strom- bzw. Datenkabel von einem dritten Steckelement (3) vollständig umschlossen werden.

10. Halterung nach einem oder mehreren der vorhergehenden Ansprüche,
**dadurch gekennzeichnet, dass** die Steckelemente (1/2/3) eine Art Vorsprung aufweisen, mittels derer das mobile Endgerät umschlossen wird, wobei sich das erste (1) und das zweite Steckelement (2) vorzugsweise an ihren Rändern nach oben beugen und dann abrunden.

11. Halterung nach einem oder mehreren der vorhergehenden Ansprüche,
**dadurch gekennzeichnet, dass** die Steckelemente (1/2/3) derart ausgeformt sind, dass diese im zusammengesteckten Zustand ein in sich geschlossenes Gehäuse bilden, abgesehen von der Materialaussparung (7), wobei die Vorderseite, wo sich beispielsweise der Touchscreen des mobilen Endgeräts befindet, größtenteils offen gestaltet ist.

12. Halterung nach einem oder mehreren der vorhergehenden Ansprüche,
**dadurch gekennzeichnet, dass** das erste (1) und das zweite Steckelement (2) derart ausgeformt sind, dass diese im zusammengesteckten Zustand eine in sich geschlossene Rückseite bzw. in sich geschlossenes Gehäuse bilden, abgesehen von der Materialaussparung (7), wobei die Vorderseite, wo sich beispielsweise der Touchscreen des mobilen Endgeräts befindet, größtenteils offen gestaltet ist.

13. Halterung nach einem oder mehreren der vorhergehenden Ansprüche,
**dadurch gekennzeichnet, dass** das dritte Steckelement (3) nicht auf dem mobilen Endgerät aufliegt.

14. Halterung nach einem oder mehreren der vorhergehenden Ansprüche,
**dadurch gekennzeichnet, dass** die Halterung auch in sonstige Vorrichtungen integriert werden kann oder mit diesen fest verbunden und verschraubt werden kann.

15. Halterung nach Anspruch 14,
**dadurch gekennzeichnet, dass** die Halterung direkt an beispielsweise eine Wand geschraubt werden kann.

## Claims

1. Plug-type and screwable holder with usage lock for electronic mobile terminals, whereupon the holder consists of connectable plug-type elements (1/2/3), whereof every plug-type element (1/2/3) specifically covers and encloses the mobile terminal in the holder, whereupon the user interface of the mobile terminal remains largely uncovered, whereupon the plug-type elements (1/2/3) are screwable, and whereupon the plug-type elements (1/2) posses special recesses in the material (4/6/7), which, regarding quantity, alignment and size, are fitted to the mobile terminal,
**characterized by**
the backside of the first plug-type element (1) designed in such a way that it features a rail (13) with first openings (11), firmly connected to a plug-type element, the backside of a second plug-type element (2) designed in such a way that it features an attached board (12) which is connected to this plug-type element, the board (12) possessing secondary openings (8/14), which are screwable, and whereof a part of the secondary openings (8) can be connected with other devices, the first and a part of the secondary openings (11/14) can be connected vertically from above, and some openings (14) feature threaded sleeves.

2. holder according to one or several of the claims stated above,
**characterized by**
sufficient space that is additionally available inside the plug-type holder for something, for example power and data cable routing.

3. holder according to one or several of the claims stated above,
**characterized by**
the backside of the holder (1/2) having been constructed in such a way, that it has a gap (7) where for example power and data cables can be passed through.

4. holder according to one or several of the claims stated above,
**characterized by**
the board (12) having special recesses in the material (7), which are canal-like at right angles to each other (7) as well as in the middle of the backside.

5. holder according to one or several of the claims stated above,
**characterized by**
at least one special recess in the material (6), situated at the bottom of the second plug-type element (2).

6. holder according to one or several of the claims stated above,
**characterized by**
the plug-type elements being material independent and inherently stable.

7. holder according to one or several of the claims stated above,
**characterized by**
the board (12) of the second plug-type element (2) having been built in such a way that they have special recesses in the material (7/8), which, regarding quantity, alignment and size, are fitted to the mobile terminal.

8. holder according to one or several of the claims stated above,
**characterized by**
the plug-type holder as a whole being able to be mounted, fixed, connected and screwed, independently of place, for example to a wall, via the second plug-type element (2) and the board (12) and its openings (8) connected to it.

9. holder according to one or several of the claims stated above,
**characterized by**
one or more openings (9) existing at the bottom of the plug-type element (2) and these openings (9), including for example a connected power or data cable, being completely enclosed by a third plug-type element (3).

10. holder according to one or several of the claims stated above,
**characterized by**
the plug-type elements (1/2/3) having a kind of protrusion via which the mobile terminal is enclosed, whereupon the first (1) and the second plug-type element's (2) frame preferably bends upwards and then becomes rounded.

11. holder according to one or several of the claims stated above,
**characterized by**
the plug-type elements (1/2/3) having been shaped in such a way that they form a self-enclosed system when plugged together, except for the special recesses in the material (7), whereupon most of the front side, where for example the touchscreen of the mobile terminal is located, is designed to be open.

12. holder according to one or several of the claims stated above,
**characterized by**
the first (1) and second plug-type element (2) having been formed in such a way that they form a self-enclosed backside or rather a self-enclosed casing, except for the special recesses in the material (7), whereupon most of the front side, where for example the touchscreen of the mobile terminal is located, is designed to be open.

13. holder according to one or several of the claims stated above,
**characterized by**
the third plug-type element (3) not resting on the mobile terminal.

14. holder according to one or several of the claims stated above,
**characterized by**
the holder having the ability to be integrated into other devices or to be tightly connected and screwed to them.

15. holder according to claim number 14,
**characterized by**
the holder having the ability to be screwed to, for example, a wall.

## Revendications

1. Support enfichable et vissable avec verrouillage pour terminaux électroniques mobiles composé d'éléments enfichables (1/2/3), dont chaque élément enfichable (1/2/3) couvre ou enserre de manière ciblée le terminal électronique mobile se trouvant dans le support, le support laissant la surface utilisateur du terminal électronique mobile pour la plupart dégagée, dont les éléments enfichables (1/2/3) sont vissables, et dont les éléments enfichables (1/2) contiennent des évidements du matériau (4/6/7) qui sont adaptés au terminal électronique mobile quant au nombre, au positionnement et à la dimension,
**caractérisé par le fait que**
le derrière d'un premier élément enfichable (1) est façonné de telle manière qu'il présente un rail (13) avec de premiers orifices (11) fixement attaché au premier élément enfichable, le derrière d'un deuxième élément enfichable (2) est façonné de telle manière qu'il présente une platine (12) fixement attachée à cet élément enfichable, la platine (12) dispose de deuxièmes orifices (8/14) qui sont vissables, et dont une part (8) est connectable avec des dispositifs autres, les premiers orifices et une part des deuxièmes orifices (11/14) peuvent être vissés les uns avec les autres verticalement depuis le haut, et quelques orifices (14) sont dotés de douilles filetées.

2. Support d'après une ou plusieurs des revendications préalables
**caractérisé par le fait que**,
additionnellement, il y a assez d'espace à l'intérieur du support assemblé par enfichage pour, par exemple, l'enfilage de câbles électriques ou de données.

3. Support d'après une ou plusieurs des revendications prélabables,
**caractérisé par le fait que**
le derrière du support (1/2) est produit de telle manière qu'il contient un évidement (7) pour l'enfilage de, par exemple, un câble électrique ou un câble de données.

4. Support d'après une ou plusieurs des revendications préalables,
**caractérise par le fait que**
la platine (12) présente de plus des évidements du matériau en forme de canal perpendiculaires les uns par rapport aux autres (7) ainsi que des évidements du matériau au milieu du derrière (7).

5. Support d'après une ou plusieurs des revendications préalables,
**caractérisé par le fait qu'**
il y a au moins un évidement de matériau (6) au bord inférieur du deuxième element enfichable (2).

6. Support d'après une ou plusieurs des revendications préalables
**caractérisé par le fait que**
les éléments enfichables sont indépendants du matériel et indéformables.

7. Support d'après une ou plusieurs des revendications préalables
**caractérisé par le fait que**
la platine (12) du deuxième élément enfichable (2) est produit de telle manière qu'elle présente des évidements de matériau (7/8) qui sont adaptés au terminal électronique mobile quant à la dimension, au nombre et au positionnement.

8. Support d'après une ou plusieurs des revendications préalables,
**caractérisé par le fait que**
le support assemblé par enfichage peut dans son tout et à coup du deuxième élément enfichable (2) et la platine (12) reliée à celui-ci et ses évidements (8) être attaché, fixé, relié et vissé flexiblement à tout endroit, par exemple à un mur.

9. Support d'après une ou plusieurs des revendications préalables,
**caractérise par le fait qu'**
il y a un ou plusieurs évidements (9) au bord inférieur de l'élément enfichable (2) et que ces évidements (9) ensemble avec par exemple un câble électrique ou un câble de données connecté à eux sont enserrés par un troisième élément enfichable (3).

10. Support d'après une ou plusieurs des revendications préalables,
**caractérisé par le fait que**
les éléments enfichables (1/2/3) disposent d'une sorte de projecture à coup de laquelle le terminal électronique mobile est enserré, et où le premier (1) et le deuxième élément enfichables (2) préférablement se plient vers le haut à leurs bords pour ensuite s'arrondir.

11. Support d'après une ou plusieurs des revendications préalables,
**caractérisé par le fait que**
les éléments enfichables (1/2/3) sont formés de telle manière qu'ils constituent une boîte fermée dans leur état assemblé par enfichage, mis à part l'évidement (7), et avec le devant, ou se trouve par exemple l'écran tactile du terminal mobile, pour la plupart ouvert.

12. Support d'après une ou plusieurs des revendications préalables,
**caractérisé par le fait que**
le premier (1) et le deuxième élément enfichables (2) sont façonnés de telle manière qu'ils constituent dans leur état assemblé par enfichage un derrière fermé en soi ou bien une boîte fermée, mis à part l'évidement (7) et avec le devant, ou se trouve par exemple l'écran tactible du terminal mobile, pour la plupart ouvert.

13. Support d'après une ou plusieurs des revendications préalables,
**caractérisé par le fait que**
le troisième élément enfichable (3) ne repose pas sur le terminal mobile.

14. Support d'après une ou plusieurs des revendications préalables,
**caractérisé par le fait que**
le support peut aussi être intégré dans d'autres dispositifs ou être fixement relié et vissé à eux.

15. Support d'après la revendication 14,
**caractérisé par le fait que**
le support peut être directement fixé à, par exemple, un mur.
